# EUROPEAN PATENT SPECIFICATION

(11) **EP 3 128 580 B1**
(45) Date of publication and mention of the grant of the patent: **26.12.2018**
(21) Application number: 15194636.5
(22) Date of filing: 13.11.2015
(51) Int. Cl.: H01M 4/04, H01M 4/134, H01M 4/1395, H01M 4/38, H01M 10/052, H01M 4/62, H01M 4/02

(54) **LITHIUM METAL FREE SILICON/SULFUR BATTERY**
LITHIUM-METALLFREIE SILICIUM/SCHWEFEL-BATTERIE
BATTERIE AU SILICIUM/SOUFRE EXEMPTE DE LITHIUM MÉTAL

(30) Priority: 03.08.2015 KZ 20150919
(43) Date of publication of application: 08.02.2017
(73) Proprietor: Institut of Batteries, LLC, 010000 Astana (KZ)
(72) Inventor: BAKENOV, Zhumabay, 010000 Astana (KZ); HARA, Toru, 010000 Astana (KZ); KURMANBAYEVA, Indira, 012804 Akmola region, the village Koschy (KZ); MENTBAYEVA, Almagul, 010000 Astana (KZ); KONAROV, Aishuak, 012804 Akmola region, the village Koschy (KZ)
(74) Representative: Koudine, Andreï

(56) References cited:
- KR-A- 20120 092 529
- US-A1- 2014 127 573
- JUSEF HASSOUN ET AL: "A contribution to the progress of high energy batteries: A metal-free, lithium-ion, siliconsulfur battery", JOURNAL OF POWER SOURCES, ELSEVIER SA, CH, vol. 202, 19 November 2011 (2011-11-19), pages 308-313, XP028440066, ISSN: 0378-7753, DOI: 10.1016/J.JPOWSOUR.2011.11.060 [retrieved on 2011-11-27]
- RAN ELAZARI ET AL: "Rechargeable lithiated silicon sulfur (SLS) battery prototypes", ELECTROCHEMISTRY COMMUNICATIONS, ELSEVIER, AMSTERDAM, NL, vol. 14, no. 1, 23 October 2011 (2011-10-23), pages 21-24, XP028392466, ISSN: 1388-2481, DOI: 10.1016/J.ELECOM.2011.10.020 [retrieved on 2011-10-29]

## Description

The invention relates to rechargeable batteries (accumulators), in particular, to the rechargeable batteries comprising a sulfur-based cathode.

Known batteries (see, for example, KR20120092529A1) include a stack comprising a positive electrode (i.e. a cathode), a negative electrode (i.e. an anode) and a delimiter (i.e. a separator) isolating electrically the cathode from the anode. In these conditions, the said stack is immersed in an electrolyte having an electrochemical communication with the cathode and the anode or the separator is wetted by the electrolyte in view to provide the electrochemical communication between the cathode and the anode.

Lithium-sulfur (in abbreviated form Li/S) batteries are considered as one of the most promising candidates for a next generation of the rechargeable accumulators. This is due to very high theoretical capacities of metallic lithium and elemental sulfur, 3850 mAh/g and 1672 mAh/g, respectively, compared with conventional electrode materials such as
- graphite which is used in the known batteries as an anode material and has a theoretical capacity 372 mAh/g, and
- oxide of lithium and another metal (for example, LiCoO₂) which is used in the known batteries as a cathode material and has a theoretical capacity 274 mAh/g, but in practice it is around 140 mAh/g.
However, the lithium-sulfur batteries have critical drawbacks that should be overcome:
- lithium dendrite growth due to use of lithium metal anode, which may cause an internal short circuit failure,
- electrically insulating nature of sulfur (used on the cathode) that requires a large amount of conducting agents (additives), which are electrochemically inactive (i.e. do not contribute in energy storage), thus reducing capacity of the lithium-sulfur battery due to lower sulfur mass-loading,
- dissolution of polysulfides, formed upon electrochemical reaction, into the electrolyte and their consequent transfer towards the anode causing capacity fading.

In regards of the cathode, it is known that the intrinsic insulating nature of sulfur may be compensated by mixing sulfur with conducting agents such as conducting carbon materials. Recently, it was suggested:
- an infiltration of sulfur into meso- and/or micro-porous carbon materials [L. Yuan, H. Yuan, X. Qiu, L. Chen, and W. Zhu, J. Power sources, 189, 1141 (2009)],
- *in-situ* polymerization of conducting polymers in sulfur-dispersed solution [J. Wang, J. Chen, K. Konstantinov, L. Zhao, S. H. Ng, G. X. Wang, Z. P. Guo, and H. K. Liu, Electrochimica Acta, 51, 4634 (2006)],
- a combination of conducting polymers and nano-structured carbon materials [F. Wu, J. Chen, L. Li, T. Zhao, and R. Chen, J. Phys. Chem. C 115, 24411 (2011)].
Although an effectiveness of sulfur use, namely, an available gravimetric capacity of composites, has been improved by these methods, a more serious problem is a sulfur mass-loading per unit area of less than 2 mg/cm² offering a capacity per unit area of less than 2 mAh/g. This limited mass-loading of sulfur means that this cathode cannot offer a capacity higher than that of conventional LiCoO₂-based cathodes with at least 2.5 mAh/g.

It is known that the capacity fading of the sulfur-based cathode resulting from the dissolution of polysulfides can be also restricted/suppressed by forming sulfur/polyacrylonitrile composites (in abbreviated form S/PAN) by heat-treatment of a sulfur/polyacrylonitrile mixture [J. Wang, J. Yang, J. Xie, and N. Xu, Adv. Mater., 14, 963 (2002)]. Partially pyrolyzed and cyclized polyacrylonitrile can stabilize and suppress the sulfur dissolution into an electrolyte solution through a redistribution of electrons in outermost electronic orbitals or through forming chemical bonds between polyacrylonitrile and sulfur through polarized C-N chemical bonds.

Silicon (in abbreviated form Si) has a theoretical capacity of 4200 mAh/g (practically its value is equal to 1000-2000 mAh/g). Therefore, silicon can be used as an alternative to metal lithium (in abbreviated form Li) in the anodes, for example, in the batteries in which the cathode material comprises oxides of lithium and another metal such as LiCoO₂. There are known works on this anode comprising silicon: see, for example:
- [H. Wu, G. Zheng, N. Liu, T. J. Carney, Y. Yang, and Y. Cui, Nano Lett., 12, 904-909 (2012)],
- [J. Luo, X. Zhao, J. Wu, H. D. Jang, H. H. Kung, and J. Huang, Phys. Chem. Lett., 3, 1824-1829 (2012)], and
- [D. M. Piper, T. A. Yersak, S.-B. Son, S. C. Kim, C. S. Kang, K. H. Oh, C. Ban, A. C. Dillon, and S.-H. Lee, Adv. Energy Mater., 3, 697 (2013)].
However, the sulfur mass-loading (into the cathodes) into the published works is too low (from 0,1 to 1 mg/cm²) and is not sufficient for obtaining a high capacity and energy density. Furthermore, when the sulfur mass-loading is increased, the cathode is peeled-off from a current collector. This limited sulfur mass-loading means that this cathode comprising sulfur cannot offer a capacity higher than that of conventional LiCoO₂-based cathodes with at least 2,5 mAh/g.

Based on the original observations described above, the present invention mainly has as a goal to propose a method of assembling of a rechargeable battery (accumulator) which comprises a stack consisting of an anode, a separator wetted in an organic electrolyte, and a cathode, said rechargeable battery being deprived of at least some of the above-mentioned disadvantages.

Thus, the invention concerns a method of assembling of a rechargeable battery, the method comprising a first phase of manufacturing of an anode from a first composite, a second phase of manufacturing of a cathode from a second composite, a third phase of manufacturing of a stack consisting of the anode, a separator wetted in an organic electrolyte, and the cathode, and of putting this stack into a housing of the rechargeable battery. The first phase of manufacturing of the anode from the first composite includes:
- a stage of first slurry preparing by mixing a silicon powder, a conductive polymer and dimethylformamide,
- a stage of first slurry casting into a porous conductive substrate for obtaining the first composite,
- a stage of first heat-treatment of the first composite into an inert atmosphere for obtaining a silicon-based anode,
- a stage of short-circuiting of the silicon-based anode with metal lithium in the organic electrolyte for obtaining the pre-lithiated silicon-based anode.

Preferably, the first phase of manufacturing of the anode from the first composite also includes a stage of removing of a surface film consisting of silicon oxide from particles of the silicon powder.

Preferably, the silicon powder comprises particles having a diameter from 30 nm to 50 nm. The stage of removing of the surface film consisting of silicon oxide from the particles of the silicon powder includes:
- a stage of mixing 90 wt.% of the silicon powder and 10 wt.% of the conductive polymer dissolved in dimethylformamide with a ratio solid/ dimethylformamide equal to 1:4 for obtaining a first mixture,
- a stage of second heat-treatment of the first mixture comprising three sequential steps:
   ∘ a first step carriyng out in a vacuum oven at 60°C during height hours,
   ∘ a second step following the first step and carriyng out into an inert gaz atmosphere at 300°C during three hours,
   ∘ a third step following the second step and carriyng out into the inert gaz atmosphere at 1000°C during five hours.

Preferably, a pore size of the porous conductive substrate is more than 75 microns and a porosity of the porous conductive substrate is from 80% to 90%.

Preferably, a thickness of the porous conductive substrate consists of less than 250 microns.

Preferably, the thickness of the porous conductive substrate is from 100 microns to 250 microns.

Preferably, the second phase of manufacturing of a cathode from a second composite includes:
- a stage of preparing of a sulfur-based third composite,
- a stage of second slurry preparing by mixing the sulfur-based third composite, a carbon-based conductive agent and a binder,
- a stage of second slurry casting into the porous conductive substrate for obtaining a second composite,
- a stage of heat-treatment of the second composite for obtaining the sulfur-based cathode.

Preferably, the conductive porous substrate is selected from a group of following materials: (a) carbon fiber paper; (b) carbon cloth.

In a first completion variant of the method of assembling according to the invention, the stage of preparing of the sulfur-based third composite includes a stage of mixing of a sulfur powder with the conductive polymer. In these conditions, the conductive polymer is selected from a following group of polymers: (a) polyacrylonitrile ; (b) polypyrrole.

In a second completion variant of the method of assembling according to the invention, which is alternative to the first variant, the stage of preparing of the sulfur-based third composite includes a stage of mixing of a sulfur powder with a carbon material. In these conditions, the carbon material is selected from a following group of the carbon materials: (a) granulated electroconductive carbon black, (b) acetylene black.

Preferably, the sulfur powder comprises particles having a 100 mesh diameter.

Preferably, the first composite comprises the conductive porous substrate consisting of the carbon fiber paper having a first thickness equal to 110 µm. The second composite comprises the conductive porous substrate consisting of the carbon fiber paper having a second thickness equal to 370 µm.

Preferably, the organic electrolyte consists of a solution of 1 mol*dm⁻³ lithium hexafluorophosphate salt in a second mixture. The second mixture consists of ethylene carbonate, ethylmethyl carbonate and dimethyl carbonate with a volume ratio 1/1/1.

Preferably, the housing of the rechargeable battery is prismatic.

A rechargeable battery made according to the method of the invention comprises a stack consisting of an anode, a separator wetted in an organic electrolyte, and a cathode. The stack is free of metal lithium. In these conditions, the anode is pre-lithiated and comprises silicon (for example, a composite anode such as silicon/polyacrylonitrile (in abbreviated form Si/PAN)) and the cathode comprises sulfur (for example, a composite cathode such as sulfur/polyacrylonitrile (in abbreviated form S/PAN).

The rechargeable battery has no disadvantages described above which are typical for the Li/S batteries or for the Si/LiCoO₂ batteries.

Preferably, the anode consists of a pre-lithiated heat-treated first composite. This first composite comprises a conductive porous substrate cast by a first slurry. This first slurry is a first mixture comprising a silicon powder, a conductive polymer and dimethylformamide.

This contributes to a growth of silicon mass-loading into the anode simultaneously with increasing of its (anode) electrical conductivity and a reliable fixation of silicon on the anode.

Preferably, the cathode consists of a heat-treated second composite. This second composite comprises the conductive porous substrate cast by a second slurry. This second slurry is a second mixture comprising a sulfur-based third composite, a carbon-based conductive agent and a binder.

This contributes to a growth of sulfur mass-loading into the cathode simultaneously with increasing of its (cathode) electrical conductivity and a reliable fixation of sulfur on the cathode.

Preferably, the conductive polymer is selected from a following group of polymers: (i) polyacrylonitrile ; (ii) polypyrrole.

Said conductive polymers are readily available and, thus, adapted for mass production of the rechargeable batteries according to the invention.

Preferably, the sulfur-based third composite consists of a heat-treated third mixture selected from a following group of mixtures:
(a) a mixture of a sulfur powder with the conductive polymer,
(b) a mixture of a sulfur powder with a carbon material selected from a following group of materials:
   (i) granulated electroconductive carbon black,
   (j) acetylene black.

Said materials are readily available and, thus, adapted for mass production of the rechargeable batteries according to the invention.

Preferably, the conductive porous substrate is selected from a group of following materials: (a) carbon fiber paper; (b) carbon cloth.

Said materials are readily available and, thus, adapted for mass production of the rechargeable batteries according to the invention.

Preferably, the carbon-based conductive agent consists of acetylene black.

Said conductive agent is readily available and, thus, adapted for mass production of the rechargeable batteries according to the invention.

Preferably, the binder consists of polyvinylidene fluoride in n-methyl-2-pyrrolidinone with a weight ratio polyvinylidene fluoride/n-methyl-2-pyrrolidinone being equal 1/1,2.

Said binder is readily available and, thus, adapted for mass production of the rechargeable batteries according to the invention.

Preferably, a silicon mass-loading into the pre-lithiated anode is 2,5 mg/cm², and a sulfur mass-loading into the cathode is 4 mg/cm².

The lithium metal free silicon/sulfur battery made according to the method of the invention shows a capacity at least comparable to known rechargeable batteries.

Preferably, the silicon powder comprises particles having a diameter from 30 nm to 50 nm.

The specified particles size of the silicon powder contributes to its optimal fixation on external and internal surfaces of the conductive porous substrate.

Preferably, the silicon powder is free from a surface film consisting of silicon oxide.

This feature contributes to increasing the electrical conductivity of the anode and a reliable fixation of silicon on the anode.

Preferably, the sulfur powder comprises particles having a 100 mesh diameter.

The specified particles size of the sulfur powder contributes to its optimal fixation on the external and internal surfaces of the conductive porous substrate.

Preferably, the organic electrolyte consists of a solution of 1 mol*dm⁻³ lithium hexafluorophosphate salt in a fourth mixture. This fourth mixture consists of ethylene carbonate, ethylmethyl carbonate and dimethyl carbonate with a volume ratio 1/1/1.

This feature contributes to increasing the electrical conductivity of the separator.

Preferably, the first composite comprises the conductive porous substrate consisting of the carbon fiber paper having a first thickness equal to 110 µm, and the second composite comprises the conductive porous substrate consisting of the carbon fiber paper having a second thickness equal to 370 µm.

This feature contributes to optimizing a thickness of the stack consisting of the anode, the separator wetted in the organic electrolyte, and the cathode, so that it could be easily put into a button cell or into a housing of a prismatic battery.

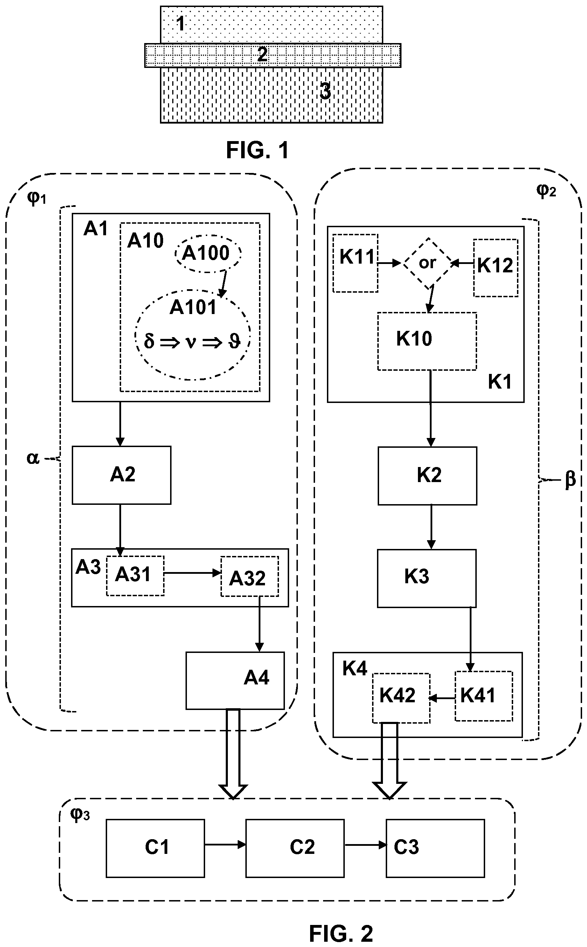

Other distinguishing features and advantages of the invention ensue from the description given below to illustrate the essence of the invention. This description is not restrictive for the invention. In addition, the description comprises references to accompanying figures 1 and 2. These figures 1 and 2 are included into the description, i.e. they are its integral part.

Figure 1 shows a stack "anode/separator/cathode" (i.e. a rechargeable element) for a lithium metal free silicon/sulfur accumulator. As can be seen from the figure 1, the said stack comprises three following parts:
- a first part which illustrates schematically a pre-lithiated silicon-based anode 1,
- a second part which illustrates schematically a separator 2, and
- a third part which illustrates schematically a sulfur-based cathode 3.

Figure 2 shows an assembling flowchart of the lithium metal free silicon/sulfur accumulator according to the invention.

The first part of the stack of the lithium metal free silicon/sulfur accumulator in figure 1, namely, the pre-lithiated silicon-based anode 1, may comprise:
- a porous (electrical current) conductive substrate, for example, a carbon fiber paper (in abbreviated form CFP) having a thickness of 110 µm, and
- a silicon powder, a silicon mass-loading into the electrode being equal to 2,5 mg/cm². In these conditions, cyclized polyacrylonitrile (in abbreviated form PAN) formed upon heat treatment, homogeneously covers the silicon powder and the carbon fiber paper.

A first method of manufacturing α (from a first composite) of the pre-lithiated silicon-based anode 1 for the lithium metal free silicon/sulfur accumulator according to the invention comprises four stages A1, A2, A3 and A4 described below (fig. 2).

During the stage A1, it is prepared a first slurry, which comprises a first mixture comprising a silicon powder, a conductive polymer and dimethylformamide (in abbreviated form DMF).

During the stage A2, this first slurry (resulting from the stage A1) is cast into a porous conductive substrate. Preferably, this porous conductive substrate is a macroporous material having a pore size more than 75 microns and a porosity of about 85% (for example, from 80% to 90%). Preferably, a thickness of the porous conductive substrate consists of less than 250 microns (for example, from 100 microns to 250 microns). These selective physical parameters of the porous conductive substrate provide a more optimal coverage by the first slurry of external and internal surfaces of the porous conductive substrate during a process of first slurry casting A2 into the porous conductive substrate. The carbon fiber paper may be used as the porous conductive substrate. As an alternative of the carbon fiber paper, a carbon cloth may also be used as the porous conductive substrate. As a result of this casting A2, the first slurry covers the external surface of the porous conductive substrate, as well as the internal surface of the porous conductive substrate (thus, as a result of this casting A2, the first slurry penetrates into the pores of the porous conductive substrate). This contributes to a growth of silicon mass-loading into the anode according to the invention.

During the stage A3, the porous conductive substrate (for example, the above-mentioned carbon fiber paper) cast by the first slurry as a result of the stage A2, is exposed to a heat-treatment into an inert atmosphere (for example, at 300°C in an argon atmosphere). This heat-treatment permits to fix particles of the silicon powder (which are in the first slurry) on the external and internal surfaces of the conductive porous substrate. Thus, the conductive porous substrate with silicon particles fixed on it, forms a stable three-dimensional current collecting network. In these conditions, polyacrylonitrile, which is formed during the heat-treatment, homogeneously covers the said three-dimensional current collecting network. As a result of the heat-treatment, polyacrylonitrile becomes partially pyrolyzed and cyclized and encapsulates (i.e. envelops) the silicon particles. This contributes to increase an electrical conductivity of the anode according to the invention.

During the stage A4, a short-circuit of the silicon-based anode resulting from the stage A3 with metal lithium is carried out. This short-circuit is realized by a direct contact of the silicon-based anode resulting from the stage A3 with metal lithium in an organic electrolyte. A solution of 1 mol*dm⁻³ lithium hexafluorophosphate salt (in abbreviated form LiPF₆) in a mixture of ethylene carbonate/ethylmethyl carbonate/dimethyl carbonate (with a volume ratio 1/1/1) can serve as example of such organic electrolyte. Thus, the pre-lithiated silicon-based anode 1 adapted for using in the lithium metal free silicon/sulfur accumulator according to the invention is obtained as a result of the stage A4. The pre-lithiation is required for an expected operation of the rechargeable battery according to the invention because the silicon-based anode as well as the sulfur-based cathode (fig. 1) do not comprise lithium ions.

The second part of the stack in figure 1, namely, the separator 2, may be represented by a polyethylene- or polypropylene-based membrane.

The third part of the stack in figure 1, namely, the sulfur-based cathode 3 may comprise the conductive porous substrate, for example, the carbon fiber paper having a thickness of 110 µm, and sulfur with mass-loading of 4 mg/cm². In these conditions, sulfur is homogeneously distributed in cyclized polyacrylonitrile or in a carbon material.

A second method according to the invention of manufacturing β (from a second composite) of the sulfur-based cathode 3 for the lithium metal free silicon/sulfur accumulator comprises four stages K1, K2, K3 and K4 described below (fig. 2).

During the stage K1, it is prepared a sulfur-based third composite.

In a first variant of the stage K1, sulfur is mixed K11 with the conductive polymer, for example, with polyacrylonitrile or with polypyrrole (in abbreviated form PPy) in view to obtain a composite mixture "sulfur/conductive polymer" (for example, S/PAN or S/PPy). Further, the obtained composite mixture "sulfur/conductive polymer" is exposed to a heat-treatment K10 into an inert atmosphere, for example, at 300°C in an argon atmosphere during three hours. The sulfur-based third composite (more precisely, a first variant of the third composite) of "sulfur/conductive polymer" type is prepared.

In a second variant of the stage K1 (alternative of the first variant of the stage K1 described above), sulfur is mixed K12 with a carbon material selected, for example, from following materials: (a) granulated electroconductive carbon black (for example, produced by Akzo Nobel company under the name of «Ketjenblack », in abbreviated form KB), (b) acetylene black (in abbreviated form AB), in view to obtain a composite mixture "sulfur/carbon material" (for example, S/KB or S/AB). Further (by analogy with the first variant described above), the composite mixture "sulfur/carbon material" is exposed to a heat-treatment K10 into the inert atmosphere, for example, at 300°C in the argon atmosphere during three hours. The sulfur-based third composite (more precisely, the second variant of the third composite) of "sulfur/carbon material" type is prepared.

During the stage K2, it is prepared a second slurry comprising:
- the sulfur-based third composite resulting from the stage K1: for example, the first variant of the "sulfur/conductive polymer" third composite (S/PAN or S/PPy) or - alternatively - the second variant of the "sulfur/carbon material" third composite (S/KB or S/AB),
- a carbon-based (electrical current) conductive agent, for example: acetylene black (in abbreviated form AB), and
- a binder, for example, polyvinylidene fluoride (in abbreviated form PVdF) in n-methyl-2-pyrrolidinone (in abbreviated form NMP).

During the stage K3, this second slurry (prepared as a result of the stage K2) is cast into the porous (electrical current) conductive substrate. Preferably, this porous conductive substrate is a macroporous material having a pore size more than 75 microns and a porosity of about 85% (for example, from 80% to 90%). Preferably, a thickness of the porous conductive substrate consists of more than 250 microns (for example, from 250 microns to 400 microns). These selective physical parameters of the porous conductive substrate provide a more optimal coverage by the second slurry of external and internal surfaces of the porous conductive substrate during a process of second slurry casting K2 into the porous conductive substrate. The carbon fiber paper may be used as the porous conductive substrate. As an alternative of the carbon fiber paper, a carbon cloth may also be used as the porous conductive substrate. Other porous carbon-based electroconductive material having above-mentioned physical parameters and different from the carbon fiber paper (or from the carbon cloth), may also be used as the porous conductive substrate. As a result of this casting K3, the second slurry covers the external surface of the porous conductive substrate, as well as the internal surface of the porous conductive substrate. This contributes to a growth of sulfur mass-loading into the cathode.

During the stage K4, the porous conductive substrate cast by the second slurry as a result of the stage K3, is exposed to a heat-treatment. In a first variant (not represented in fig. 2) of the stage K4, this heat-treatment comprises only one-step carried out in a vacuum oven, for example, at 60°C, preferably, during height hours (in practice, during one night). In a second variant (represented in figure 2) of the stage K4 - alternative of the first variant - this heat-treatment comprises two steps: a first step K41 is carried out in the vacuum oven, for example, at 60°C, preferably, during eight hours (in practice, during one night), and a second step K42 - following the first step K41 - is carried out into an inert gaz (for example, argon) atmosphere at 300°C during three hours. This second heat-treatment step K42 assists fixing of the sulfur particles on the external surface of the porous conductive substrate, as well as on the internal surface of the porous conductive substrate (i.e. inside the pores). Moreover, the second heat-treatment step K42 contributes to chemical bonding of sulfur with the partially pyrolyzed at the temperature of 300°C conductive polymer mixed with sulfur in the first variant of the stage K1. Such sulfur particles fixing contributes:
- to reduce a peeling of the cathode with high (up to 4 mg/cm² as mentioned above) sulfur mass-loading from a current collector, and
- to improve an electrical contact and an electrical conductivity of the second composite.

Thus, the sulfur-based cathode 3 adapted for using in the lithium metal free silicon/sulfur accumulator is obtained as a result of the stage K4.

### Example

As described below, an assemblage according to the invention of the lithium metal free silicon/sulfur accumulator is carried out in three phases ϕ₁, ϕ₂, ϕ₃, shown in figure 2.

A first assembling phase ϕ₁ comprises all stages A1-A4 of the above-mentioned first method of manufacturing (from the first composite) of the pre-lithiated silicon-based anode 1.

In the present example, the first slurry comprises a silicon powder with particles having a diameter from 30 nm to 50 nm (for example, the silicon powder produced by Guangzhou Jiechuang Trading Co. Ltd).

In the present example, the stage A1 of first slurry preparing comprises a preliminary preparatory stage A10 for removing from the silicon powder particles of an (electrochemically inactive) surface film consisting of silicon oxide (in abbreviated form SiO₂). During the stage A10:
- it is mixed (stage A100) 90 wt.% of the silicon powder and 10 wt.% of a conductive polymer (for example, of polyacrylonitrile produced by the Sigma-Aldrich company) dissolved in dimethylformamide DMF with a ratio "solid/DMF" equal to 1:4;
- a heat-treatment of this mixture is produced (stage A101). This heat-treatment comprises three sequential steps (fig. 2):
   ∘ a first step δ is carried out in a vacuum oven, for example, at 60°C, preferably, during eight hours (in practice, during one night),
   ∘ a second step ν following the first step δ is carried out into an inert gaz (for example, argon) atmosphere at 300°C during three hours,
   ∘ a third step ν following the second step ν is carried out into the inert gaz (for example, argon) atmosphere at 1000°C during five hours.

Further, it is carried out properly first slurry preparing (stage A1). For this purpose, the silicon powder (with the electrochemically inactive surface film of silicon oxide (SiO₂) removed from the silicon powder particles as a result of the preliminary preparatory stage A10) is mixed with the conductive polymer (for example, polyacrylonitrile produced by the Sigma-Aldrich company) with a mass ratio of 7:3. Further, the obtained thereby solid mixture Si/PAN is added to dimethylformamide so that the weight ratio "solid (i.e. solid mixture Si/PAN) / DMF" was equal to 1:4.

During the stage A2, the first slurry Si/PAN/DMF (resulting from the stage A1) is cast into a carbon fiber paper (i.e. into a porous conductive substrate) having a thickness of 110 micrometers (for example, the carbon fiber paper referenced «TGP-H-030» and produced by the Toray Industries, Inc.).

During the stage A3, the carbon fiber paper cast by the first slurry as a result of the stage A2, is exposed to a heat-treatment, which is realized in two steps: a first step A31 is carried out in the vacuum oven, for example, at 60°C, preferably, during eight hours (in practice, during one night), and a second step A32 - following the first step A31 - is carried out into the inert gaz (for example, argon) atmosphere at 300°C during three hours.

A silicon mass-loading into the anode obtained as a result of the stage A3, is equal to 2.5 mg/cm².

During the stage A4, a short-circuit of the silicon-based anode resulting from the stage A3 with metal lithium is carried out. This short-circuit is realized by a direct contact of the silicon-based anode resulting from the stage A3 with metal lithium in an organic electrolyte: for example, in a solution of 1 mol*dm⁻³ lithium hexafluorophosphate salt (in abbreviated form LiPF₆) in a mixture of ethylene carbonate/ethylmethyl carbonate/dimethyl carbonate (with a volume ratio 1:1:1).

Thus, the pre-lithiated silicon-based anode 1 (with the silicon mass-loading of 2.5 mg/cm²) adapted for using in the lithium metal free silicon/sulfur accumulator is obtained as a result of the stage A4: the first assembling phase ϕ₁ is over.

A second assembling phase ϕ₂ comprises all stages K1-K4 of the above-mentioned second method of manufacturing β (from the second composite) of the sulfur-based cathode 1.

During the stage K1, it is prepared a sulfur-based third composite. In the present example, it is possible to prepare two alternative variants of the said sulfur-based third composite.

In a first variant of the stage K1, a sulfur powder (for example, a sulfur powder with a 100 mesh diameter of particles produced by the Sigma-Aldrich company) is mixed K11 with the conductive polymer, for example, with polyacrylonitrile or with polypyrrole (in abbreviated form PPy) in view to obtain a composite mixture "sulfur/conductive polymer" (for example, S/PAN or S/PPy). Further, the obtained composite mixture "sulfur/conductive polymer" is exposed to a heat-treatment K10 into an inert atmosphere, for example, at 300°C in the argon atmosphere during three hours. The sulfur-based third composite (more precisely, a first variant of the third composite) of "sulfur/conductive polymer" type is prepared.

In a second variant of the stage K1, which is alternative of the first variant of the stage K1, a sulfur powder (for example, a sulfur powder with a 100 mesh diameter of particles produced by the Sigma-Aldrich company) is mixed K12 with a carbon material selected, for example, from following materials: (a) granulated electroconductive carbon black (for example, produced by Akzo Nobel company under the name of «Ketjenblack », in abbreviated form KB), (b) acetylene black (in abbreviated form AB), in view to obtain a composite mixture "sulfur/carbon material" (for example, S/KB or S/AB). Further (by analogy with the first variant described above), the composite mixture "sulfur/carbon material" resulting from the stage K12, is exposed to the above-mentioned heat-treatment K10 into the inert atmosphere, for example, at 300°C in the argon atmosphere during three hours. The sulfur-based third composite (more precisely, a second variant of the third composite) of "sulfur/carbon material" type is prepared.

During the stage K2, it is prepared a second slurry comprising:
- the sulfur-based third composite resulting from the stage K1: for example, the first variant of the "sulfur/conductive polymer" third composite (S/PAN or S/PPy) or - alternatively - the second variant of the "sulfur/carbon material" third composite (S/KB or S/AB),
- a carbon-based (electrical current) conductive agent, in the present example it is used an acetylene black (in abbreviated form AB), and
- a binder, for example, polyvinylidene fluoride (in abbreviated form PVdF) in n-methyl-2-pyrrolidinone (in abbreviated form NMP) with a weight ratio "solid/NMP" equal to 1/1,2.

During the stage K3, this second slurry (prepared as a result of the stage K2) is cast into the carbon fiber paper, which is used in the present example as the porous (electrical current) conductive substrate. This carbon fiber paper has a thickness of 370 micrometers and is produced by the Toray Industries, Inc. under reference «TGP-H-120».

During the stage K4, the carbon fiber paper cast by the second slurry as a result of the stage K3, is exposed to a heat-treatment. In a first variant (not represented in fig. 2) of the stage K4, this heat-treatment comprises only one-step carried out in a vacuum oven, for example, at 60°C, preferably, during eight hours (in practice, during one night). In a second variant (represented in figure 2) of the stage K4 - alternative of the first variant - this heat-treatment comprises two steps: a first step K41 is carried out in the vacuum oven, for example, at 60°C, preferably, during eight hours (in practice, during one night), and a second step K42 - following the first step K41 - is carried out into an inert gaz (for example, argon) atmosphere at 300°C during three hours.

The cathode 3 having a sulfur mass-loading of 4 mg/cm² is obtained as a result of the stage K4. Thus, the second assembling phase ϕ₂ is over.

A third assembling phase ϕ₃ comprises three following stages C1-C3.

Firstly, a polypropylene-based separator 2 (in the present example, it is used a multilayer polypropylene separator produced by the Celgard company under reference «2400») is wetted (stage C1) in an organic electrolyte. In the present example, a solution of 1 mol*dm⁻³ lithium hexafluorophosphate salt (in abbreviated form LiPF₆) in a mixture of ethylene carbonate/ethylmethyl carbonate/dimethyl carbonate with a volume ratio 1:1:1 is used as the organic electrolyte.

Further, the pre-lithiated silicone-based anode 1, the separator 2 wetted in the organic electrolyte (resulting from the stage C1) and the sulfur-based cathode 3 are piled up (stage C2) together with each other to form a stack "anode/separator/cathode" as shown in figure 1.

The stack "anode/separator/cathode" obtained as a result of the stage C2 (i.e. a rechargeable lithium metal free silicon/sulfur element) is put (stage C3) into a button cell or into a housing/pack for a prismatic battery.

Thus, the lithium metal free silicon/sulfur accumulator is assembled as a result of the stage C3: the third assembling phase ϕ₃ is over.

## Claims

1. Method of assembling of a rechargeable battery, the method comprising a first phase (ϕ₁) of manufacturing of an anode (1) from a first composite, a second phase (ϕ₂) of manufacturing of a cathode (3) from a second composite, a third phase (ϕ₃) of manufacturing of a stack consisting of the anode (1), a separator (2) wetted in an organic electrolyte, and the cathode (3), and of putting (C3) this stack into a housing of the rechargeable battery, the first phase (ϕ₁) of manufacturing of the anode (1) from the first composite includes:
• a stage of first slurry preparing (A1) by mixing a silicon powder, a conductive polymer and dimethylformamide,
• a stage of first slurry casting (A2) into a porous conductive substrate for obtaining the first composite,
• a stage of first heat-treatment (A3) of the first composite into an inert atmosphere for obtaining a silicon-based anode,
• a stage of short-circuiting (A4) of the silicon-based anode with metal lithium in the organic electrolyte for obtaining the pre-lithiated silicon-based anode (1).

2. Method of assembling according to claim 1, **characterized in that** the first phase (ϕ₁) of manufacturing of the anode (1) from the first composite also includes a stage of removing (A10) of a surface film consisting of silicon oxide from particles of the silicon powder.

3. Method of assembling according to claim 2, **characterized in that** the silicon powder comprises particles having a diameter from 30 nm to 50 nm and **in that** the stage of removing (A10) of the surface film consisting of silicon oxide from the particles of the silicon powder includes:
• a stage of mixing (A100) 90 wt.% of the silicon powder and 10 wt.% of the conductive polymer dissolved in dimethylformamide with a ratio solid/ dimethylformamide equal to 1:4 for obtaining a first mixture,
• a stage of second heat-treatment (A101) of the first mixture comprising three sequential steps:
∘ a first step (δ) carriyng out in a vacuum oven at 60°C during height hours,
∘ a second step (ν) following the first step (δ) and carriyng out into an inert gaz atmosphere at 300°C during three hours,
∘ a third step (ν) following the second step (ν) and carriyng out into the inert gaz atmosphere at 1000°C during five hours.

4. Method of assembling according to anyone of claims 1 to 3, **characterized in that** a pore size of the porous conductive substrate is more than 75 microns and **in that** a porosity of the porous conductive substrate is from 80% to 90%.

5. Method of assembling according to anyone of claims 1 to 4, **characterized in that** a thickness of the porous conductive substrate consists of less than 250 microns.

6. Method of assembling according to claim 5, **characterized in that** the thickness of the porous conductive substrate is from 100 microns to 250 microns.

7. Method of assembling according to anyone of claims 1 to 6, **characterized in that** the second phase (ϕ₂) of manufacturing of a cathode (3) from a second composite includes:
• a stage of preparing (K1) of a sulfur-based third composite,
• a stage of second slurry preparing (K2) by mixing the sulfur-based third composite, a carbon-based conductive agent and a binder,
• a stage of second slurry casting (K3) into the porous conductive substrate for obtaining a second composite,
• a stage of heat-treatment (K4) of the second composite for obtaining the sulfur-based cathode.

8. Method of assembling according to anyone of claims 1 to 7, **characterized in that** the conductive porous substrate is selected from a group of following materials: (a) carbon fiber paper; (b) carbon cloth.

9. Method of assembling according to claim 7 ou 8, **characterized in that** the stage of preparing (K1) of the sulfur-based third composite includes:
• a stage of mixing (K11) of a sulfur powder with the conductive polymer,
• a stage of heat-treatment (K10) of the sulfur powder with the conductive polymer,
and **in that** the conductive polymer is selected from a following group of polymers: (a) polyacrylonitrile ; (b) polypyrrole.

10. Method of assembling according to claim 7 ou 8, **characterized in that** the stage of preparing (K1) of the sulfur-based third composite includes:
• a stage of mixing (K11) of a sulfur powder with a carbon material,
• a stage of heat-treatment (K10) of the sulfur powder with the carbon material,
and **in that** the carbon material is selected from a following group of the carbon materials: (a) granulated electroconductive carbon black, (b) acetylene black.

11. Method of assembling according to anyone of claims 7 to 10, **characterized in that** the sulfur powder comprises particles having a 100 mesh diameter.

12. Method of assembling according to anyone of claims 7 to 11, **characterized in that** the first composite comprises the conductive porous substrate consisting of the carbon fiber paper having a first thickness equal to 110 µm, and **in that** the second composite comprises the conductive porous substrate consisting of the carbon fiber paper having a second thickness equal to 370 µm.

13. Method of assembling according to anyone of claims 1 to 12, **characterized in that** the organic electrolyte consists of a solution of 1 mol*dm⁻³ lithium hexafluorophosphate salt in a second mixture and **in that** the second mixture consists of ethylene carbonate, ethylmethyl carbonate and dimethyl carbonate with a volume ratio 1/1/1.

14. Method of assembling according to anyone of claims 1 to 13, **characterized in that** the housing of the rechargeable battery is prismatic.

## Patentansprüche

1. Verfahren zum Zusammenbau einer wiederaufladbaren Batterie, wobei das Verfahren eine erste Phase (ϕ₁) der Herstellung einer Anode (1) aus einem ersten Verbundwerkstoff, eine zweite Phase (ϕ₂) der Herstellung einer Kathode (3) aus einem zweiten Verbundwerkstoff, eine dritte Phase (ϕ₃) der Herstellung eines Stapels, bestehend aus der Anode (1), einem Separator (2), der mit einem organischen Elektrolyt benetzt ist, und der Kathode (3), und des Einsetzens (C3) dieses Stapels in ein Gehäuse der wiederaufladbaren Batterie umfasst, wobei die erste Phase (ϕ₁) der Herstellung der Anode (1) aus dem ersten Verbundwerkstoff Folgendes beinhaltet:
• eine Stufe des ersten Herstellens (A1) einer Aufschlämmung durch Mischen eines Siliciumpulvers, eines leitfähigen Polymers und von Dimethylformamid,
• eine Stufe des ersten Gießens (A2) der Aufschlämmung in ein poröses leitfähiges Substrat zum Erhalten des ersten Verbundmaterials,
• eine Stufe des ersten Wärmebehandelns (A3) des ersten Verbundwerkstoffs in einer Inertatmosphäre zum Erhalten einer Anode auf Siliciumbasis,
• eine Stufe des Kurzschließens (A4) der Anode auf Siliciumbasis mit metallischem Lithium im organischen Elektrolyt zum Erhalten der vorlithiierten Anode auf Siliciumbasis (1).

2. Verfahren zum Zusammenbau nach Anspruch 1, **dadurch gekennzeichnet, dass** die erste Phase (ϕ₁) der Herstellung der Anode (1) aus dem ersten Verbundwerkstoff auch eine Stufe des Entfernens (A10) eines aus Siliciumoxid bestehenden Oberflächenfilms von Teilchen des Siliciumpulvers beinhaltet.

3. Verfahren zum Zusammenbau nach Anspruch 2, **dadurch gekennzeichnet, dass** das Siliciumpulver Teilchen mit einem Durchmesser von 30 nm bis 50 nm umfasst, und dass die Stufe des Entfernens (A10) des aus Siliciumoxid bestehenden Oberflächenfilms von den Teilchen des Siliciumpulvers Folgendes beinhaltet:
• eine Stufe des Mischens (A100) von 90 Gew.-% des Siliciumpulvers und 10 Gew.-% des in Dimethylformamid gelösten leitfähigen Polymers mit einem Verhältnis Feststoff/Dimethylformamid entsprechend 1:4 zum Erhalten einer ersten Mischung,
• eine Stufe der zweiten Wärmebehandlung (A101) der ersten Mischung, umfassend drei aufeinanderfolgende Schritte:
o einen ersten Schritt (δ), der in einem Vakuumofen bei 60 °C während acht Stunden durchgeführt wird,
o einen zweiten Schritt (ν) nach dem ersten Schritt (δ) und Durchführen in einer Inertgasatmosphäre bei 300 °C während drei Stunden,
o einen dritten Schritt (ν) nach dem zweiten Schritt (ν) und Durchführen in der Inertgasatmosphäre bei 1000 °C während fünf Stunden.

4. Verfahren zum Zusammenbau nach einem der Ansprüche 1 bis 3, **dadurch gekennzeichnet, dass** eine Porengröße des porösen leitenden Substrats mehr als 75 Mikrometer beträgt und **dadurch, dass** eine Porosität des porösen leitenden Substrats von 80 % bis 90 % beträgt.

5. Verfahren zum Zusammenbau nach einem der Ansprüche 1 bis 4, **dadurch gekennzeichnet, dass** eine Dicke des porösen leitenden Substrats weniger als 250 µm beträgt.

6. Verfahren zum Zusammenbau nach Anspruch 5, **dadurch gekennzeichnet, dass** die Dicke des porösen leitfähigen Substrats zwischen 100 µm und 250 µm beträgt.

7. Verfahren zum Zusammenbau nach einem der Ansprüche 1 bis 6, **dadurch gekennzeichnet, dass** die zweite Phase (ϕ₂) der Herstellung einer Kathode (3) aus einem zweiten Verbundwerkstoff Folgendes beinhaltet:
• eine Stufe des Herstellens (K1) eines dritten Verbundwerkstoffs auf Schwefelbasis,
• eine Stufe des Herstellens (K2) einer zweiten Aufschlämmung durch Mischen des dritten Verbundwerkstoffs auf Schwefelbasis, eines leitfähigen Mittels auf Kohlenstoffbasis und eines Bindemittels,
• eine Stufe des zweiten Gießens (K3) einer Aufschlämmung in das poröse leitfähige Substrat zum Erhalten eines zweiten Verbundwerkstoffs,
• eine Stufe der Wärmebehandlung (K4) des zweiten Verbundwerkstoffs zum Erhalten der Kathode auf Schwefelbasis.

8. Verfahren zum Zusammenbau nach einem der Ansprüche 1 bis 7, **dadurch gekennzeichnet, dass** das leitfähige poröse Substrat aus einer Gruppe von folgenden Materialien ausgewählt wird: (a) Kohlefaserpapier; (b) Kohlefasergewebe.

9. Verfahren zum Zusammenbau nach Anspruch 7 oder 8, **dadurch gekennzeichnet, dass** die Stufe des Herstellens (K1) des dritten Verbundwerkstoffs auf Schwefelbasis Folgendes beinhaltet:
• eine Stufe des Mischens (K11) eines Schwefelpulvers mit dem leitfähigen Polymer,
• eine Stufe des Wärmebehandelns (K10) des Schwefelpulvers mit dem leitfähigen Polymer,
und **dadurch, dass** das leitfähige Polymer aus einer folgenden Gruppe von Polymeren ausgewählt ist: (a) Polyacrylnitril; (b) Polypyrrol.

10. Verfahren zum Zusammenbau nach Anspruch 7 oder 8, **dadurch gekennzeichnet, dass** die Stufe des Herstellens (K1) des dritten Verbundwerkstoffs auf Schwefelbasis Folgendes beinhaltet:
• eine Stufe des Mischens (K11) eines Schwefelpulvers mit einem Kohlenstoffmaterial,
• eine Stufe des Wärmebehandelns (K10) des Schwefelpulvers mit dem Kohlenstoffmaterial,
und **dadurch, dass** das Kohlenstoffmaterial aus einer folgenden Gruppe der Kohlenstoffmaterialien ausgewählt ist: (a) granulierter elektrisch leitfähiger Ruß, (b) Acetylenruß.

11. Verfahren zum Zusammenbau nach einem der Ansprüche 7 bis 10, **dadurch gekennzeichnet, dass** das Schwefelpulver Teilchen mit einem Durchmesser von 100 mesh umfasst.

12. Verfahren zum Zusammenbau nach einem der Ansprüche 7 bis 11, **dadurch gekennzeichnet, dass** der erste Verbundwerkstoff das leitfähige poröse Substrat umfasst, das aus dem Kohlefaserpapier mit einer ersten Dicke von 110 µm besteht, und **dadurch, dass** der zweite Verbundwerkstoff das leitfähige poröse Substrat umfasst, das aus dem Kohlefaserpapier mit einer zweiten Dicke von 370 µm besteht.

13. Verfahren zum Zusammenbau nach einem der Ansprüche 1 bis 12, **dadurch gekennzeichnet, dass** der organische Elektrolyt aus einer Lösung von 1 s mol*dm⁻³ Lithiumhexafluorphosphatsalz in einer zweiten Mischung besteht und **dadurch, dass** die zweite Mischung aus Ethylencarbonat, Ethylmethylcarbonat und Dimethylcarbonat mit einem Volumenverhältnis von 1/1/1 besteht.

14. Verfahren zum Zusammenbau nach einem der Ansprüche 1 bis 13, **dadurch gekennzeichnet, dass** das Gehäuse der wiederaufladbaren Batterie prismatisch ist.

## Revendications

1. Procédé d'assemblage d'une batterie rechargeable, le procédé comprenant une première phase (ϕ1) de fabrication d'une anode (1) à partir d'un premier composite, une deuxième phase (ϕ2) de fabrication d'une cathode (3) à partir d'un second composite, une troisième phase (ϕ3) de fabrication d'un empilement constitué de l'anode (1), d'un séparateur (2) trempé dans un électrolyte organique et de la cathode (3), et de mise en place (C3) de cet empilement dans un boîtier de la batterie rechargeable, la première phase (ϕ1) de fabrication de l'anode (1) à partir du premier composite comprend :
• une étape de première préparation de suspension (A1) par le mélange d'une poudre de silicium, d'un polymère conducteur et de diméthylformamide,
• une étape de première coulée de suspension (A2) dans un substrat conducteur poreux permettant d'obtenir le premier composite,
• une étape de premier traitement thermique (A3) du premier composite dans une atmosphère inerte permettant d'obtenir une anode à base de silicium,
• une étape de court-circuit (A4) de l'anode à base de silicium avec du lithium métallique dans l'électrolyte organique permettant d'obtenir l'anode à base de silicium pré-lithiée (1).

2. Procédé d'assemblage selon la revendication 1, **caractérisé en ce que** la première phase (ϕ1) de fabrication de l'anode (1) à partir du premier composite comprend également une étape d'élimination (A10) d'un film de surface constitué d'oxyde de silicium à partir de particules de la poudre de silicium.

3. Procédé d'assemblage selon la revendication 2, **caractérisé en ce que** la poudre de silicium comprend des particules ayant un diamètre compris entre 30 nm et 50 nm et **en ce que** l'étape d'élimination (A10) du film de surface constitué d'oxyde de silicium à partir des particules de la poudre de silicium comprend :
• une étape de mélange (A100) de 90 % en poids de la poudre de silicium et de 10 % en poids du polymère conducteur dissous dans du diméthylformamide ayant un rapport solide/diméthylformamide égal à 1:4 permettant d'obtenir un premier mélange,
• une étape de second traitement thermique (A101) du premier mélange comprenant trois étapes séquentielles :
∘ une première étape (δ) s'effectuant dans une étuve à vide à 60 °C pendant huit heures,
o une deuxième étape (ν) suivant la première étape (δ) et s'effectuant dans une atmosphère de gaz inerte à 300 °C pendant trois heures,
o une troisième étape (ν) suivant la deuxième étape (ν) et s'effectuant dans l'atmosphère de gaz inerte à 1000°C pendant cinq heures.

4. Procédé d'assemblage selon l'une quelconque des revendications 1 à 3, **caractérisé en ce qu'**une taille de pore du substrat conducteur poreux est supérieure à 75 microns et **en ce qu'**une porosité du substrat conducteur poreux est comprise entre 80 % et 90 %.

5. Procédé d'assemblage selon l'une quelconque des revendications 1 à 4, **caractérisé en ce qu'**une épaisseur du substrat conducteur poreux est inférieure à 250 microns.

6. Procédé d'assemblage selon la revendication 5, **caractérisé en ce que** l'épaisseur du substrat conducteur poreux est comprise entre 100 microns et 250 microns.

7. Procédé d'assemblage selon l'une quelconque des revendications 1 à 6, **caractérisé en ce que** la deuxième phase (ϕ2) de fabrication d'une cathode (3) à partir d'un second composite comprend :
• une étape de préparation (K1) d'un troisième composite à base de soufre,
• une étape de seconde préparation de suspension (K2) par le mélange du troisième composite à base de soufre, d'un agent conducteur à base de carbone et d'un liant,
• une étape de seconde coulée de suspension (K3) dans le substrat conducteur poreux permettant d'obtenir un second composite,
• une étape de traitement thermique (K4) du second composite permettant d'obtenir la cathode à base de soufre.

8. Procédé d'assemblage selon l'une quelconque des revendications 1 à 7, **caractérisé en ce que** le substrat poreux conducteur est choisi dans un ensemble de matériaux suivants :
(a) papier de fibre de carbone ; (b) tissu de carbone.

9. Procédé d'assemblage selon la revendication 7 ou 8, **caractérisé en ce que** l'étape de préparation (K1) du troisième composite à base de soufre comprend :
• une étape de mélange (K11) d'une poudre de soufre avec le polymère conducteur,
• une étape de traitement thermique (K10) de la poudre de soufre avec le polymère conducteur,
et **en ce que** le polymère conducteur est choisi dans un ensemble suivant de polymères : (a) polyacrylonitrile ; (b) polypyrrole.

10. Procédé d'assemblage selon la revendication 7 ou 8, **caractérisé en ce que** l'étape de préparation (K1) du troisième composite à base de soufre comprend :
• une étape de mélange (K11) d'une poudre de soufre avec un matériau à base de carbone,
• une étape de traitement thermique (K10) de la poudre de soufre avec le matériau à base de carbone,
et **en ce que** le matériau à base de carbone est choisi dans un groupe suivant de matériaux à base de carbone : (a) carbone noir granulé électroconducteur, (b) acétylène noir.

11. Procédé d'assemblage selon l'une quelconque des revendications 7 à 10, **caractérisé en ce que** la poudre de soufre comprend des particules ayant un diamètre de 100 mesh.

12. Procédé d'assemblage selon l'une quelconque des revendications 7 à 11, **caractérisé en ce que** le premier composite comprend le substrat poreux conducteur constitué de papier de fibre de carbone ayant une première épaisseur égale à 110 µm, et **en ce que** le second composite comprend le substrat poreux conducteur constitué du papier de fibre de carbone ayant une seconde épaisseur égale à 370 µm.

13. Procédé d'assemblage selon l'une quelconque des revendications 1 à 12, **caractérisé en ce que** l'électrolyte organique consiste en une solution d'un sel d'hexafluorophosphate de lithium à 1 mol*dm⁻³ dans un second mélange et **en ce que** le second mélange consiste en du carbonate d'éthylène, du carbonate d'éthylméthyle et du carbonate de diméthyle dans un rapport volumique 1/1/1.

14. Procédé d'assemblage selon l'une quelconque des revendications 1 à 13, **caractérisé en ce que** le boîtier de la batterie rechargeable est prismatique.
